# EUROPÄISCHE PATENTANMELDUNG

(11) **EP 2 778 459 A2**
(43) Veröffentlichungstag der Anmeldung: **17.09.2014**
(21) Anmeldenummer: 14155224.0
(22) Anmeldetag: 14.02.2014
(51) Int. Cl.: F16D 23/12, B60K 26/02

(54) **Betätigungseinrichtung für eine Kupplung**

(30) Priorität: 12.03.2013 DE 102013204182
(71) Anmelder: Schaeffler Technologies GmbH & Co. KG, 91074 Herzogenaurach (DE)
(72) Erfinder: Michel, Barbara, 97256 Geroldshauen (DE); Honselmann, Sebastian, 77886 Lauf (DE); Panther, Urban, 77960 Seelbach (DE)

(57) **Zusammenfassung**

Die Erfindung betrifft eine Betätigungseinrichtung für beispielsweise eine Kupplung, insbesondere eines Kraftfahrzeuges, mit einem verschwenkbar um eine Drehachse gelagerten Pedalhebel, welcher zur Erzeugung eines hydraulischen Betätigungsdrucks mit einem Geberzylinder wirkverbunden ist, wobei zumindest ein beispielsweise als Übertotpunktfeder ausgebildeter Energiespeicher mit einem Ende/Anbindungspunkt an dem Pedalhebel angelenkt ist. Erfindungsgemäß steht die Übertotpunktfeder mit ihrem zweiten Ende/Anbindungspunkt mit einer mit dem Geberzylinder gekoppelten hydraulischen Stellvorrichtung in Wirkverbindung, mittels der bei einer Überschreitung eines vorbestimmten Wertes der auf den Pedalhebel aufgebrachten Betätigungskraft und damit einer Überschreitung eines vorbestimmten Wertes des im hydraulischen System vorhandenen Drucks eine selbsttätige Nachstellung der Übertotpunktfeder und damit eine Anpassung der Betätigungskraft realisierbar ist.

## Beschreibung

Die Erfindung bezieht sich auf eine Betätigungseinrichtung, beispielsweise für eine Kupplung, insbesondere für Kraftfahrzeuge, gemäß dem Oberbegriff des ersten Anspruchs. Solche Betätigungseinrichtungen werden etwa auch für Bremspedale verwendet.

Bei einer hydraulischen Betätigung einer Fahrzeugkupplung in einem Kraftfahrzeug wird die Kupplung mittels eines hydraulischen Nehmerzylinders, der über eine Druckleitung mit einem Geberzylinder verbunden ist, betätigt. Ein Kolben des Geberzylinders wird über ein Fußpedal, das beispielsweise über eine Schub- oder Kolbenstange mit dem Geberzylinder in Verbindung steht, beaufschlagt. Bei diesen Systemen hängt die Pedalkraft zur Betätigung des Fußpedals von der Kupplungskennlinie ab, wobei über den Betätigungsweg unterschiedliche Pedalkräfte auftreten. Die Kupplungskennlinie und damit auch die Kennlinie der Pedalkraft über den Betätigungsweg können sich z. B. durch Verschleiß der Kupplung ändern.

Um einen möglichst gleichmäßigen Verlauf der Betätigungskraft über den Pedalweg zu erreichen bzw. beim Betätigen der Kupplung die vom Fahrer auf den Pedalhebel aufzubringende Betätigungskraft zu vermindern, sind aus dem Stand der Technik unterschiedliche Lösungen bekannt. So wird häufig eine so genannte Übertotpunktfeder eingesetzt, die das unbetätigte Pedal in seiner Ruhestellung hält und die bei einer Bewegung des Pedals zwischen der Ruhestellung und der Endstellung zunächst geringfügig vorgespannt ist und nach dem Überwinden eines Totpunktes die weitere Bewegung des Pedals unterstützt. Insbesondere kann damit die Pedalkraft nach Überwinden des Totpunktes und zum Ende des Pedalweges spürbar verringert werden, wodurch teilweise auch die Stellkräfte der Ausrückvorrichtung der Kraftfahrzeugkupplung leichter überwunden werden können. Eine derartige Übertotpunktfeder wird beispielsweise in der DE 199 19 339 A1 beschrieben.

Es sind auch andere Kompensationsmechanismen außer Übertotpunktfedern bekannt, beispielsweise Rückzugsfedern.

Durch die Anordnung der Befestigungspunkte der Übertotpunktfeder zum einen am Pedalhebel und zum anderen an einer festen Halterung am Fahrzeug ändert sich bei einer Betätigung des Pedals die Richtung der Feder in Bezug auf den Pedalhebel. Je nach Richtung der Federachse entsteht ein Hebelarm zum Pedaldrehpunkt. Mit der Federkraft wird ein Drehmoment um den Pedaldrehpunkt erzeugt. Dieses Drehmoment ändert somit während der Betätigung seine Kraft und Richtung. Durch die richtige Anordnung einer solchen Feder kann durch das Drehmoment die Betätigungskraft am Pedal auf einen gewünschten Verlauf angepasst werden. Häufig kommen auch so genannte Rückzugsfedern zum Einsatz, die während der Betätigung dauerhaft eine Zugkraft verursachen. Auch diese Federn ändern den Pedalkraftverlauf.

Die bekannten Einrichtungen zum Anpassen der Pedalkraft/Betätigungskraft können zwar den Kraftverlauf anpassen. Kraftstreuungen durch Abweichungen der Betätigungskraft, die beispielsweise durch Toleranzen der Bauteile entstehen, können sie jedoch nicht ausgleichen. Sind große Abweichungen vorhanden, streuen auch die angepassten Kraftverläufe stark. Zudem sehen bekannte Anpassungsmechanismen häufig keine Nachstellung der Betätigungseinrichtung vor.

Deshalb besteht die Aufgabe der Erfindung darin, eine Betätigungseinrichtung beispielsweise für eine Kupplung, insbesondere für Kraftfahrzeuge, mit einem verschwenkbar um einen Drehpunkt gelagerten Pedalhebel, welcher zur Erzeugung eines hydraulischen Betätigungsdrucks mit einem Geberzylinder wirkverbunden ist, wobei zumindest ein Energiespeicher wie Übertotpunktfeder mit einem Ende/Anbindungspunkt an dem Pedalhebel angelenkt ist, zu schaffen, der auch bei großen Kraftabweichungen selbsttätig einen Ausgleich der Kraftdifferenzen und ein Nachstellen der Pedalkraft verwirklicht.

Diese Aufgabe wird mit den Merkmalen des ersten Anspruchs gelöst. Vorteilhafte Ausgestaltungen ergeben sich aus den Unteransprüchen.

Bei einer Betätigungseinrichtung für eine Kupplung, insbesondere eines Kraftfahrzeuges, mit einem verschwenkbar um einen Drehpunkt gelagerten Pedalhebel, welcher zur Erzeugung eines hydraulischen Betätigungsdrucks mit einem Geberzylinder wirkverbunden ist, wobei zumindest ein Energiespeicher, der als Übertotpunktfeder ausgebildet sein kann, mit einem Ende/Anbindungspunkt an dem Pedalhebel angelenkt ist, steht der Energiespeicher mit seinem zweiten Ende/Anbindungspunkt mit einer mit dem Geberzylinder gekoppelten hydraulischen Stellvorrichtung in Wirkverbindung, mittels der bei einer Überschreitung eines vorbestimmten Wertes der auf den Pedalhebel aufgebrachten Betätigungskraft und damit einer Überschreitung eines vorbestimmten Wertes des im hydraulischen System vorhandenen Drucks eine selbsttätige Nachstellung des Energiespeichers und damit eine Anpassung der Betätigungskraft realisierbar ist.

Eine vorteilhafte Ausführungsform sieht vor, dass ein als Übertotpunktfeder ausgebildeter Energiespeicher mit ihrem zweiten Ende/Anbindungspunkt schwenkbar mit einer Kolbenstange eines hydraulischen Nachstellzylinders der Stellvorrichtung verbunden ist, wobei mittels einer axialen Verschiebung der Kolbenstange entlang einer Längsachse des Nachstellzylinders eine Änderung der Vorspannung und eine Änderung der Kinematik der Übertotpunktfeder realisierbar ist.

Dabei findet bei der axialen Verschiebung der Kolbenstange des Nachstellzylinders eine Schwenkbewegung der Federachse der Übertotpunktfeder um den kolbenstangenseitigen und/oder den pedalhebelseitigen Anbindungspunkt statt. Die über den kolbenstangenseitigen Anbindungspunkt miteinander verbundenen Übertotpunktfeder und Nachstellzylinder können sowohl nacheinander (in Reihe) als auch parallel zueinander angeordnet sein.

Eine weitere vorteilhafte Ausführungsform sieht vor, dass die Übertotpunktfeder in/an einem Gehäuse eines hydraulischen Nachstellzylinders der Stellvorrichtung angeordnet ist, dessen Kolbenstange ortsfest und das Gehäuse axial verschiebbar vorgesehen sind, wobei mittels einer axialen Verschiebung des Gehäuses entlang einer Längsachse des Nachstellzylinders eine Änderung der Vorspannung der Übertotpunktfeder realisierbar ist.

Dabei fallen bei der Anordnung der Übertotpunktfeder innerhalb des Gehäuses oder an dem Außenumfang des Gehäuses des hydraulischen Nachstellzylinders die Längsachse des Nachstellzylinders und die Federachse der Übertotpunktfeder zusammen.

In vorteilhafter Weise sind der Nachstellzylinder/die Stellvorrichtung und die Übertotpunktfeder gemeinsam um einen gehäusefesten Drehpunkt schwenkbar. Vorzugsweise stützt sich die Übertotpunktfeder mit ihrem zweiten Ende an einem radialen Vorsprung des Gehäuses des Nachstellzylinders ab.

Besonders vorteilhaft ist hierbei, dass bei allen Ausführungsformen die hydraulische Stellvorrichtung einen Mechanismus aufweist, der ein Zurückbewegen der Übertotpunktfeder aus der nachgestellten Position verhindert. Dieser Mechanismus für ein einseitiges Nachstellen kann ein mechanischer Rastmechanismus und/oder ein Freilauf und/oder ein hydraulisches Rückschlagventil sein.

Die Erfindung lässt zahlreiche Ausführungsformen zu. Zur Verdeutlichung ihres Grundprinzips sind mehrere davon in der Zeichnung dargestellt und werden nachfolgend beschrieben.

Es zeigen:
Fig. 1 eine schematische Darstellung einer ersten Ausführungsform einer erfindungsgemäßen Betätigungseinrichtung in einer ersten Position
Fig. 2 eine schematische Darstellung einer ersten Ausführungsform einer erfindungsgemäßen Betätigungseinrichtung in einer zweiten Position
Fig. 3 eine Detailansicht der Ausführungsform nach Fig. 1 und Fig. 2
Fig. 4 eine schematische Darstellung einer zweiten Ausführungsform einer erfindungsgemäßen Betätigungseinrichtung in einer Vorderansicht
Fig. 5 eine schematische Darstellung der zweiten Ausführungsform einer erfindungsgemäßen Betätigungseinrichtung nach Fig. 4 in einer Seitenansicht
Fig. 6 eine Teilansicht einer dritten Ausführungsform einer erfindungsgemäßen Betätigungseinrichtung in einer Schnittdarstellung
Fig. 7 eine Teilansicht einer vierten Ausführungsform einer erfindungsgemäßen Betätigungseinrichtung in einer Schnittdarstellung
Fig. 8 eine Teilansicht einer fünften Ausführungsform einer erfindungsgemäßen Betätigungseinrichtung in einer Schnittdarstellung

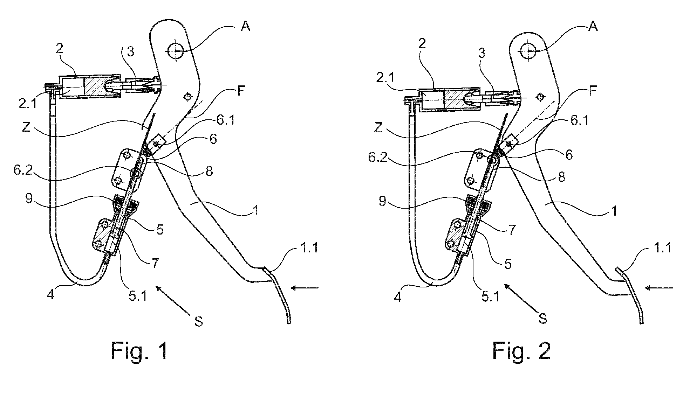

Fig. 1 zeigt in einer schematischen Darstellung eine erste Ausführungsform einer erfindungsgemäßen Betätigungseinrichtung für eine Kupplung, beispielsweise für eine Kupplung eines Kraftfahrzeuges, welche in an sich bekannter Art und Weise von einem Ausrücksystem einer hydraulischen Übertragungsstrecke betätigbar ist.

Gemäß Fig. 1 ist ein Pedalhebel 1 um einen Drehpunkt A (beispielsweise an einem hier nicht gezeigten Gehäuse oder Pedalbock) schwenkbar gelagert. An seinem dem Drehpunkt A abgewandten Ende ist an dem Pedalhebel 1 eine Fußplatte 1.1 vorgesehen, gegen die üblicherweise ein Fahrer des Kraftfahrzeuges mit seinem Fuß drückt, um den Pedalhebel 1 zu betätigen bzw. zu verschwenken. Durch einen Pfeil ist hier die Schwenkrichtung des Pedalhebels 1 angedeutet. Ein Geberzylinder 2 ist über eine Kolbenstange 3 mit dem Pedalhebel 1 verbunden. An seinem der Kolbenstange 3 gegenüberliegenden Ende des Geberzylinders 2 ist ein Anschluss für eine Druckleitung 4 vorgesehen, über welche eine Kopplung zwischen dem Geberzylinder 2 und einer hydraulischen Stellvorrichtung S stattfindet.

Die Stellvorrichtung S weist einen hydraulischen Nachstellzylinder 5 auf, dessen Druckraum 5.1 über die Druckleitung 4 mit einem Druckraum 2.1 des Geberzylinders 2 verbunden ist. Des Weiteren ist ein als eine Übertotpunktfeder 6 wirkendes Federelement mit einer Federachse F mit seinem einen Ende in einem Anbindungspunkt 6.1 an dem Pedalhebel 1 schwenkbar gelagert. Das andere Ende der Übertotpunktfeder 6 ist mit einem Anbindungspunkt 6.2 an einer Kolbenstange 7 des Nachstellzylinders 5 ebenfalls schwenkbar angebracht. Dabei kann der vorzugsweise an dem Ende der Kolbenstange 7 befindliche Anbindungspunkt 6.2 der Übertotpunktfeder 6 in einer Führung 8 verschiebbar aufgenommen werden. Diese optional verwendbare Führung 8 soll die entstehenden und auf die entlang einer Längsachse Z des Nachstellzylinders 5 verschiebbar angeordnete Kolbenstange 7 wirkenden Querkräfte abstützen. Alternativ kann auch der Nachstellzylinder 5 diese Kräfte aufnehmen. Ein am Nachstellzylinder 5 angeordneter mechanischer Freilauf 9 dient dem Feststellen in einer entsprechenden Position. Sowohl der Nachstellzylinder 5 als auch die Führung 8 sind hier ortsfest beispielsweise an einem Gehäuse (nicht näher gezeigt) angeordnet.

Dabei zeigt die Fig.1 die erfindungsgemäße Betätigungseinrichtung mit einer bereits stattgefundenen teilweisen Verstellung/Nachstellung und in Fig. 2 ist diese Einrichtung in einer vollständig verstellten/nachgestellten Position dargestellt.

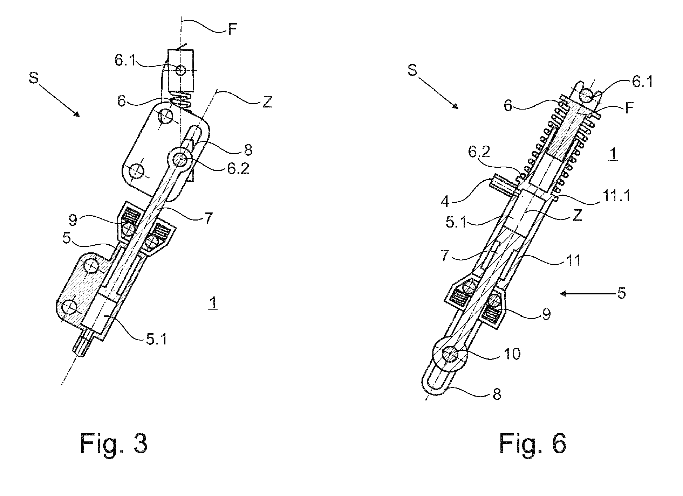

In Fig. 3 ist eine Detailansicht der erfindungsgemäßen Einrichtung der Fig. 1 und Fig. 2 mit einer vergrößerten Darstellung erfindungswesentlicher Bauteile gezeigt. Dabei befindet sich der hier nur angedeutete Pedalhebel 1 in einer Position, die einer ausgerückten oder fast ausgerückten Stellung entspricht.

Die Wirkungsweise dieser erfindungsgemäßen Ausführungsform ist folgende:

Bei Betätigung der Fußplatte 1.1 wird der Pedalhebel 1 um den Drehpunkt A in Pfeilrichtung verschwenkt. Dadurch wird die an dem Pedalhebel 1 angelenkte Kolbenstange 3 und somit der Kolben innerhalb des Geberzylinders 2 verschoben, wodurch der Druck in dessen Druckraum 2.1 ansteigt. Bei Überschreitung eines vorbestimmten Wertes der Betätigungskraft übersteigt der Druck in dem Druckraum 2.1 des Geberzylinders 2 und somit durch die Kopplung über die Druckleitung 4 auch der Druck in dem Druckraum 5.1 des Nachstellzylinders 5 einen Schwellwert. An der Kolbenfläche der Kolbenstange 7 entsteht analog dazu eine Kraft, die größer ist, als die von der Übertotpunktfeder 6 aufgebrachte Gegenkraft. Die Kolbenstange 7 wird entlang der Längsachse Z verschoben, wodurch auch der Anbindungspunkt 6.2 der Übertotpunktfeder 6 in Richtung des an dem Pedalhebel 1 ortsfest angeordneten Anbindungspunktes 6.1 verschoben wird. Durch die schwenkbare Anlenkung der Übertotpunktfeder 6 sowohl im pedalhebelseitigen Anbindungspunkt 6.1 als auch im nachstellzylinderseitigen Anbindungspunkt 6.2 erfolgt durch die Bewegung der Kolbenstange 7 eine Komprimierung und eine Verschwenkung der Übertotpunktfeder 6. Die Federachse F erfährt eine Richtungsänderung. Somit ändert sich sowohl die Höhe der Kompensationskraft der Übertotpunktfeder 6 als auch durch die Änderung der Kinematik deren Kraftverlauf über die Betätigung.

Um bei einem Druckabfall, der z. B. nach der Betätigung des Pedalhebels 1 auftritt, die Betätigungseinrichtung in der geänderten Position zu halten, wird eine Vorrichtung benötigt, die ein Nachstellen in nur eine Richtung verwirklicht. In dieser Ausführungsform ist diese Vorrichtung der mechanische Freilauf 9. Er ermöglicht die einseitige Verschiebung der Kolbenstange 7 des Nachstellzylinders 5 und damit des Anbindungspunktes 6.2 der Übertotpunktfeder 6 in der Führung 8 in Richtung des am Pedalhebel 1 befindlichen Anbindungspunkt 6.1 und klemmt eine entgegen gerichtete Bewegung. Anstelle des Freilaufs 9 kann auch ein mechanischer Rastmechanismus, ein hydraulisches Rückschlagventil oder eine ähnliche Vorrichtung Verwendung finden.

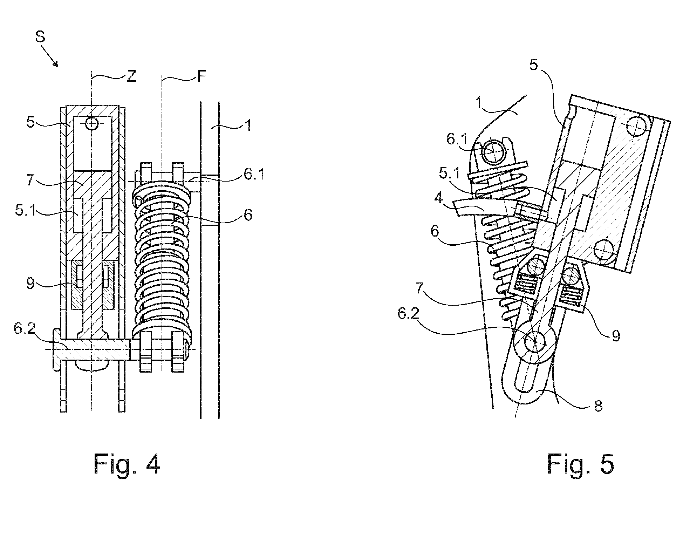

In Fig. 4 und Fig. 5 ist eine zweite Ausführungsform der erfindungsgemäßen Betätigungseinrichtung in einer Teilansicht dargestellt. Dabei sind hier und auch in den folgenden Ausführungsformen gleiche Bauteile bzw. Bauteile mit gleicher Funktion mit gleichen Bezugszeichen versehen.

Bei dieser Variante ist die Übertotpunktfeder 6 parallel zu dem Nachstellzylinder 5 angeordnet. Dadurch ist ein platzsparender Einsatz der gesamten Stellvorrichtung S möglich. Mit ihrem ersten Anbindungspunkt 6.1 ist die Übertotpunktfeder 6 wie auch schon im ersten Ausführungsbeispiel an dem Pedalhebel 1 angelenkt, während sie mit dem zweiten Anbindungspunkt 6.2 mit der in der Führung 8 verschiebbaren Kolbenstange 7 schwenkbar verbunden ist. Die eine Verbindung zum Geberzylinder 2 herstellende Druckleitung 4 (in der Seitenansicht der Fig. 5 gezeigt) ist an einen ringförmigen Druckraum 5.1 des Nachstellzylinders 5 angeschlossen, wodurch über die hier befindliche Ringfläche der Kolbenstange 7 ein Verstellen der Übertotpunktfeder 6 realisierbar ist.

Bei einer Überschreitung der Betätigungskraft am Pedalhebel 1 erhöht sich der Druck in dem mit dem Geberzylinder 2 (hier nicht gezeigt) in Verbindung stehenden ringförmigen Druckraum 5.1 des Nachstellzylinders 5. Dadurch wird die Kolbenstange 7 und damit auch der Anbindungspunkt 6.2 der Übertotpunktfeder 6 verschoben (in Fig. 4 und Fig. 5 nach oben). Diese Verschiebung bewirkt wie auch schon in dem ersten Ausführungsbeispiel eine Änderung der Höhe der Kompensationskraft und damit der Vorspannung der Übertotpunktfeder 6. Es ändert sich durch die Verschiebung des kolbenstangenseitigen Anbindungspunktes 6.2 und gleichzeitige Verschwenkung der Federachse F der Übertotpunktfeder 6 die Kinematik, wodurch sich der während der Betätigung des Pedalhebels 1 vorhandene Kraftverlauf ändert.

Auch hier kann der zum Halten der Verstellung eingesetzte Freilauf 9 durch analog wirkende Mechanismen ersetzt sowie die Führung 8 weg gelassen werden.

Die Fig. 6 zeigt eine weitere Ausführungsform einer erfindungsgemäßen Betätigungseinrichtung in einer Teilansicht. Bei dieser dritten Variante wird nicht der Anbindungspunkt 6.2 der Übertotpunktfeder 6 verschoben, sondern nur deren Federvorspannung verändert. Zu diesem Zweck ist die Übertotpunktfeder 6 in den Nachstellzylinder 5 integriert. Die in der Führung 8 (optional) angeordnete Kolbenstange 7 des Nachstellzylinders 5 ist an einem gehäusefesten Drehpunkt 10 befestigt. Durch die gehäusefeste Anordnung des Drehpunktes 10 und damit der Kolbenstange 7 ist diese axial nicht verschiebbar. Allerdings ist der komplette Nachstellzylinder 5 zusammen mit der Übertotpunktfeder 6 um den Drehpunkt 10 schwenkbar. Die mit ihrem ersten Ende/Anbindungspunkt 6.1 an dem Pedalhebel 1 (hier nicht näher gezeigt) angelenkte Übertotpunktfeder 6 stützt sich mit ihrem anderen Ende 6.2 an einem radialen Vorsprung 11.1 eines axial verschiebbar angeordneten Gehäuses 11 des Nachstellzylinders 5 ab, wobei die Längsachse Z des Nachstellzylinders 5 mit der Federachse F zusammenfällt. Auch hier ist der Freilauf 9 am Nachstellzylinder 5 angeordnet und über die Druckleitung 4 ist eine Verbindung von dem Geberzylinder 2 (nicht dargestellt) zu dem Druckraum 5.1 des Nachstellzylinders 5 vorhanden.

Bei einer Überschreitung eines vorbestimmten Wertes der Betätigungskraft erhöht sich der Druck im Druckraum 5.1 des Nachstellzylinders 5 aufgrund der auch hier über die Druckleitung 4 bestehenden Verbindung zu dem Geberzylinder 2. Dabei erreicht der Druck im Druckraum 5.1 einen Wert, der größer ist, als die entgegen wirkende Kraft der Übertotpunktfeder 6. Da die Kolbenstange 7 in dem gehäusefesten Drehpunkt 10 drehbar aber ortsfest angeordnet ist, wird hier das Gehäuse 11 des Nachstellzylinders 5 und somit auch das sich an dem radialen Vorsprung 11.1 des Gehäuses 11 abstützende Ende der Übertotpunktfeder 6 nach oben, das heißt, von dem Drehpunkt 10 weg in Richtung des an dem Pedalhebel 1 befindlichen Anbindungspunktes 6.1 verschoben. Dadurch wird die Übertotpunktfeder 6 weiter vorgespannt. Ihre Kompensationskraft wird auf Grund des gehäusefesten Drehpunktes 10 ohne Kinematikänderung erhöht.

Auch bei dieser Ausführungsform wird die durchgeführte Verstellung durch den Freilauf 9 gehalten, welcher wie oben beschrieben durch andere Mechanismen ersetzt werden kann.

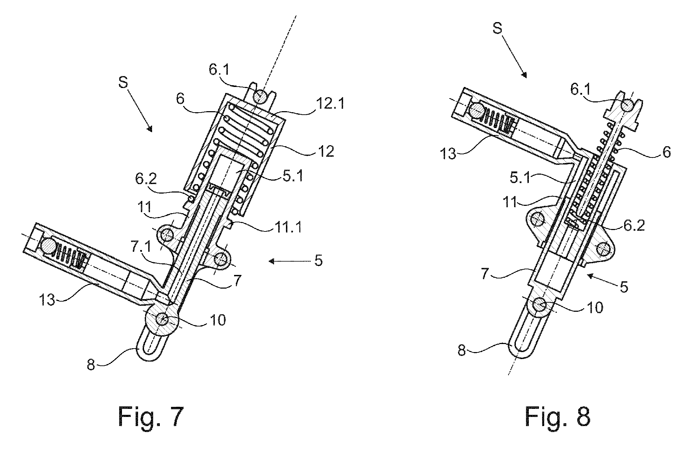

In Fig. 7 ist eine Teilansicht einer weiteren Ausführungsform einer erfindungsgemäßen Betätigungseinrichtung in einer Schnittdarstellung gezeigt. Dabei handelt es sich im Prinzip um eine kompaktere Version der weiter oben anhand der Fig. 6 beschriebenen Variante.

Die Übertotpunktfeder 6 ist an dem Außenumfang des hydraulischen Nachstellzylinders 5 in einer Hülse 12 angeordnet. Mit ihrem einen Ende 6.2 stützt sich die Übertotpunktfeder 6 auch hier an einem radialen Vorsprung 11.1 des Gehäuses 11 des Nachstellzylinders 5 ab, während ihr anderes, dem Anbindungspunkt 6.1 zugeordnetes, Ende an einem Boden 12.1 der Hülse 12 anliegt. Die an dem pedalseitigen Anbindungspunkt 6.1 befestigte, einseitig offene, Hülse 12 umgibt somit schützend die Übertotpunktfeder 6. Die in dem gehäusefesten Drehpunkt 10 befestigte, axial nicht verschiebbare Kolbenstange 7 weist eine axiale Bohrung 7.1 auf, über die eine Verbindung des Druckraums 5.1 des Nachstellzylinders 5 mit einem eine Zufuhr von Hydraulikflüssigkeit aus Richtung des Geberzylinders 2 (hier nicht gezeigt) gewährleistenden Anschluss herstellbar ist. Dieser Anschluss wird über ein hydraulisches Rückschlagventil 13 realisiert, das mit dem Druckraum 5.1 über die Bohrung 7.1 der Kolbenstange 7 in Verbindung steht. Die am Gehäuse 11 des Stellzylinders 5 befestigte Führung 9 ist auch hier wieder optional vorgesehen.

Im Gegensatz zu den bisher beschriebenen Varianten wird die Verstellung durch das hydraulische Rückschlagventil 13 gehalten, welches bei einem bestimmten Wert des anliegenden Drucks ein Zurückströmen der Hydraulikflüssigkeit verhindert. Bei einer Pedalkraft-/ Betätigungskraftüberschreitung wird der Druck links des Rückschlagventils 13, das heißt auf der Geberzylinderseite, größer als der Druck rechts auf der Nachstellzylinderseite. Das Rückschlagventil 13 öffnet und durch den sich im Druckraum 5.1 des Nachstellzylinders 5 vergrößernden Druck wird das Gehäuse 11 des Nachstellzylinders 5 und damit auch das Ende 6.2 der sich an dem radialen Vorsprung 11.1 abstützenden Übertotpunktfeder 6 in die Hülse 12 hinein in Richtung zu deren Boden 12.1 verschoben. Somit wird die Vorspannung der Übertotpunktfeder 6 erhöht. Bei einem bestimmten Wert des Drucks schließt das Rückschlagventil 13 das Volumen ein und unterbindet bis zur nächsten Kraftüberschreitung eine weitere Änderung der Vorspannung der Übertotpunktfeder 6. Alternativ könnte natürlich anstelle des Rückschlagventils 13 auch ein mechanischer Mechanismus (z. B. der Freilauf 9) eingesetzt werden.

Auch bei der in Fig. 8 gezeigten Teilansicht einer fünften Ausführungsform der erfindungsgemäßen Betätigungseinrichtung handelt es sich um eine kompaktere Version der weiter oben (Fig. 6) beschriebenen Variante. Die Übertotpunktfeder 6 ist innerhalb des ringförmig ausgebildeten Nachstellzylinders 5 angeordnet, wobei die Längsachse Z des Nachstellzylinders 5 mit der Federachse F der Übertotpunktfeder 6 zusammenfällt. Die an dem gehäusefesten Drehpunkt 10 angeordnete, axial nicht bewegliche, Kolbenstange 7 ist ebenfalls ringförmig ausgebildet. Die Zufuhr der Hydraulikflüssigkeit erfolgt hier wieder über das Rückschlagventil 13. Auch ist die am Gehäuse 11 des Nachstellzylinders 5 angeordnete Führung 8 optional.

Bei einer Überschreitung der Pedalkraft/Betätigungskraft wird der Druck auf der Geberzylinderseite des Rückschlagventils 13 größer als der Druck auf der Nachstellzylinderseite. Das Rückschlagventil 13 öffnet und im Druckraum 5.1 des Nachstellzylinders 5 baut sich ein Druck auf, der- bedingt durch die ortsfeste Kolbenstange 7 - das Gehäuse 11 des Stellzylinders 5 axial verschiebt und somit die Übertotpunktfeder 6 noch weiter komprimiert und ihre Vorspannung erhöht. Analog der weiter oben beschriebenen Wirkungsweise schließt auch hier das Rückschlagventil 13 wieder, wenn ein bestimmter Druck erreicht ist.

Die erfindungsgemäße Betätigungseinrichtung kann auch bei großen Betätigungskraftabweichungen, die beispielsweise durch Bauteiltoleranzen bedingt sind, selbsttätig einen Ausgleich der Kraftdifferenzen und ein Nachstellen der Pedalkraft/Betätigungskraft verwirklichen. Dabei ist der Einsatz der Erfindung als zusätzliche Option bei allen Kupplungspedalen anstelle eines einfachen Kraftkompensationsmechanismus möglich.

### Bezugszeichenliste

- 1: Pedalhebel
- 1.1: Fußplatte
- 2: Geberzylinder
- 2.1: Druckraum
- 3: Kolbenstange
- 4: Druckleitung
- 5: hydraulischer Nachstellzylinder
- 5.1: Druckraum
- 6: Energiespeicher/Übertotpunktfeder
- 6.1: erstes Ende/Anbindungspunkt
- 6.2: zweites Ende/Anbindungspunkt
- 7: Kolbenstange
- 7.1: Bohrung
- 8: Führung
- 9: Freilauf
- 10: Drehpunkt
- 11: Gehäuse
- 11.1: radialer Vorsprung
- 12: Hülse
- 12.1: Boden
- 13: Rückschlagventil
- A: Drehpunkt
- F: Federachse
- S: hydraulische Stellvorrichtung
- Z: Längsachse

## Patentansprüche

1. Betätigungseinrichtung beispielsweise für eine Kupplung, insbesondere für Kraftfahrzeuge, mit einem verschwenkbar um einen Drehpunkt (A) gelagerten Pedalhebel (1), welcher zur Erzeugung eines hydraulischen Betätigungsdrucks mit einem Geberzylinder (2) wirkverbunden ist, wobei zumindest ein Energiespeicher, wie Übertotpunktfeder (6) mit einem Ende/Anbindungspunkt (6.1) an dem Pedalhebel (1) angelenkt ist, **dadurch gekennzeichnet, dass** der Energiespeicher, wie Übertotpunktfeder (6), mit ihrem zweiten Ende/Anbindungspunkt (6.2) mit einer mit dem Geberzylinder (2) gekoppelten hydraulischen Stellvorrichtung (S) in Wirkverbindung steht, mittels der bei einer Überschreitung eines vorbestimmten Wertes der auf den Pedalhebel (1) aufgebrachten Betätigungskraft und damit einer Überschreitung eines vorbestimmten Wertes des im hydraulischen System vorhandenen Drucks eine selbsttätige Nachstellung des Energiespeichers, wie Übertotpunktfeder (6), und damit eine Anpassung der Betätigungskraft realisierbar ist.

2. Betätigungseinrichtung nach Anspruch 1, **dadurch gekennzeichnet, dass** ein als Übertotpunktfeder (6) ausgebildeter Energiespeicher mit seinem zweiten Ende/Anbindungspunkt (6.2) schwenkbar mit einer Kolbenstange (7) eines hydraulischen Nachstellzylinders (5) der Stellvorrichtung (S) verbunden ist, wobei mittels einer axialen Verschiebung der Kolbenstange (7) entlang einer Längsachse (Z) des Nachstellzylinders (5) eine Änderung der Vorspannung und eine Änderung der Kinematik der Übertotpunktfeder (6) realisierbar ist.

3. Betätigungseinrichtung nach Anspruch 2, **dadurch gekennzeichnet, dass** bei der axialen Verschiebung der Kolbenstange (7) des Nachstellzylinders (5) eine Schwenkbewegung der Federachse (F) der Übertotpunktfeder (6) um den kolbenstangenseitigen Anbindungspunkt (6.2) und/oder um den pedalhebelseitigen Anbindungspunkt (6.1) durchführbar ist.

4. Betätigungseinrichtung nach Anspruch 2 oder 3, **dadurch gekennzeichnet, dass** die über den Anbindungspunkt (6.2) miteinander verbundenen Übertotpunktfeder (6) und Nachstellzylinder (5) nacheinander oder parallel zueinander angeordnet sind.

5. Betätigungseinrichtung nach Anspruch 1, **dadurch gekennzeichnet, dass** die Übertotpunktfeder (6) in/an einem Gehäuse (11) eines hydraulischen Nachstellzylinders (5) der Stellvorrichtung (S) angeordnet ist, dessen Kolbenstange (7) ortsfest und das Gehäuse (11) axial verschiebbar vorgesehen sind, wobei mittels einer axialen Verschiebung des Gehäuses (11) entlang einer Längsachse (Z) des Nachstellzylinders (5) eine Änderung der Vorspannung der Übertotpunktfeder (6) realisierbar ist.

6. Betätigungseinrichtung nach Anspruch 5, **dadurch gekennzeichnet, dass** bei der Anordnung der Übertotpunktfeder (6) innerhalb des Gehäuses (11) oder an dem Außenumfang des Gehäuses (11) des hydraulischen Nachstellzylinders (5) die Längsachse (Z) des Nachstellzylinders (5) und die Federachse (F) der Übertotpunktfeder (6) zusammenfallen.

7. Betätigungseinrichtung nach Anspruch 5 oder 6, **dadurch gekennzeichnet, dass** der Nachstellzylinder (5)/die Stellvorrichtung (S) und die Übertotpunktfeder (6) gemeinsam um einen gehäusefesten Drehpunkt (10) schwenkbar sind.

8. Betätigungseinrichtung nach einem der Ansprüche 5 bis 7, **dadurch gekennzeichnet, dass** die Übertotpunktfeder (6) sich mit ihrem zweiten Ende (6.2) an einem radialen Vorsprung (11.1) des Gehäuses (11) des Nachstellzylinders (5) abstützt.

9. Betätigungseinrichtung nach einem der Ansprüche 1 bis 8, **dadurch gekennzeichnet, dass** die hydraulische Stellvorrichtung (S) einen Mechanismus aufweist, der ein Zurückbewegen der Übertotpunktfeder (6) aus der nachgestellten Position verhindert.

10. Betätigungseinrichtung nach Anspruch 9, **dadurch gekennzeichnet, dass** für ein einseitiges Nachstellen ein mechanischer Rastmechanismus und/oder ein Freilauf (9) und/oder ein hydraulisches Rückschlagventil (13) eingesetzt sind.
